# EUROPEAN PATENT APPLICATION

(11) **EP 4 759 520 A1**
(43) Date of publication of application: **17.06.2026**
(21) Application number: 25855287.6
(22) Date of filing: 13.06.2025
(51) Int. Cl.: B29C 65/18, B29C 65/00, B29D 99/00, H01M 50/105, H01M 50/183, B29L 31/00

(54) **SEALING DEVICE FOR POUCH-TYPE BATTERY CASE AND SEALING METHOD USING SAME**

(30) Priority: 04.09.2024 KR 20240119671
(71) Applicant: LG Energy Solution, Ltd., Seoul 07335 (KR)
(72) Inventor: JUNG, Woo Jung, Daejeon 34122 (KR)
(74) Representative: Plasseraud IP
(86) International application number: PCT/KR2025/008126
(87) International publication number: WO 2026/054252

(57) **Abstract**

Disclosed are a sealing apparatus for sealing a sealed portion of a battery case having an electrode assembly received therein, the sealing apparatus including a first sealing unit configured to be located on one side of the sealed portion of the battery case and a second sealing unit configured to be located on the other side of the sealed portion of the battery case, wherein the first sealing unit includes a first heating block configured to be heated to a predetermined temperature, a first support block in tight contact with the first heating block, a first sealing tool located in tight contact with one surface of the first support block, the first sealing tool being configured to press one surface of the sealed portion, and a pair of first stopper portions located on both sides of the first support block and rotatably coupled thereto, each of the first stopper portions having a contact surface inclined so as to have different heights along a circumferential surface thereof, and a sealing method using the same.

## Description

### [Technical Field]

This application claims the benefit of priority to Korean Patent Application No. 2024-0119671 filed on September 4, 2024, the disclosure of which is incorporated herein by reference in its entirety.

The present invention relates to a pouch-shaped battery case sealing apparatus and a sealing method using the same, and more particularly to a pouch-shaped battery case sealing apparatus capable of adjusting the height of a stopper such that the distance between a pair of sealing tools corresponds to the thickness of a sealed portion of a pouch-shaped battery case and a sealing method using the same.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, and a pouch-shaped battery having an electrode assembly mounted in a pouch-shaped case made of an aluminum laminate sheet.

In a typical pouch-shaped secondary battery manufacturing process, a step of inserting an electrode assembly into a receiving space of a battery case made of a laminate sheet, a step of injecting an electrolyte solution into the battery case, and a step of sealing the battery case are sequentially performed.

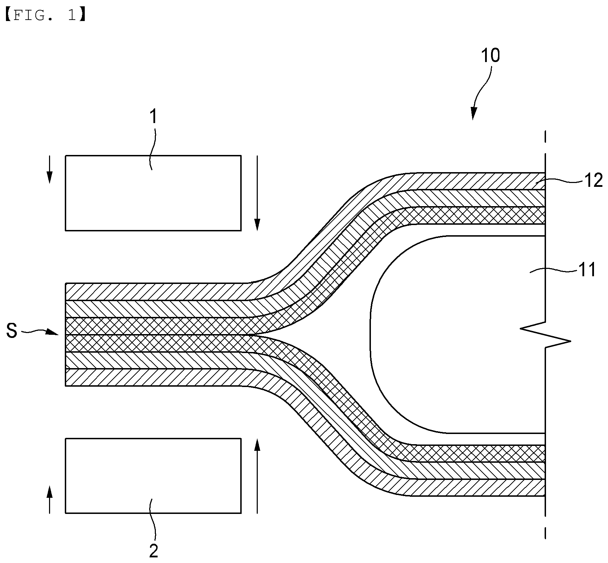

FIG. 1 is a view showing that a conventional pouch-shaped battery case sealing apparatus seals a secondary battery.

Referring to FIG. 1, the conventional pouch-shaped battery case sealing apparatus includes an upper jig 1 and a lower jig 2 located respectively above and under a sealed portion S of a battery case 12 having an electrode assembly 11 received therein. The upper jig 1 and the lower jig 2 apply a certain pressure and temperature to the sealed portion S to seal the sealed portion while being moved toward each other.

At this time, the sealed portion S is heated and pressed with the same pressure regardless of the thickness of the sealed portion S of the pouch-shaped battery case 12, resulting in uneven bonding of sealed portions S with different thicknesses, whereby variations in quality occur.

In order to solve this problem, Korean Patent Application Publication No. 10-2024-0082572 discloses a top sealing apparatus for pouch-shaped battery cells, wherein a shim ring configured to adjust the distance between a pair of sealing blocks is inserted between the pair of sealing blocks in order to adjust the thickness of a sealed portion S.

However, it is necessary to insert or remove the shim ring between or from the pair of sealing blocks each time the distance is adjusted according to the thickness of the sealed portion S, which is cumbersome, reducing work continuity and efficiency.

Particularly, in order to adjust the distance between the pair of sealing blocks stepwise, shim rings of various heights must be provided, resulting in significant cost expenditure.

### (Prior Art Document)

(Patent Document 1) Korean Patent Application Publication No. 10-2024-0082572

### [Disclosure]

### [Technical Problem]

The present invention has been made in view of the above problems, and it is an object of the present invention to provide a pouch-shaped battery case sealing apparatus capable of easily adjusting the distance between a pair of sealing tools so as to correspond to the thickness of a sealed portion of a pouch-shaped battery case and a sealing method using the same.

It is another object of the present invention to provide a pouch-shaped battery case sealing apparatus capable of minimizing the installation and maintenance costs of the apparatus and a sealing method using the same.

### [Technical Solution]

A sealing apparatus according to the present invention to accomplish the above objects, which is a sealing apparatus for sealing a sealed portion of a battery case having an electrode assembly received therein, includes a first sealing unit (100) configured to be located on one side of the sealed portion of the battery case and a second sealing unit (200) configured to be located on the other side of the sealed portion of the battery case, wherein the first sealing unit (100) includes a first heating block (110) configured to be heated to a predetermined temperature, a first support block (120) in tight contact with the first heating block (110), a first sealing tool (130) located in tight contact with one surface of the first support block (120), the first sealing tool being configured to press one surface of the sealed portion; and a pair of first stopper portions (140) located on both sides of the first support block (120) and rotatably coupled thereto, each of the first stopper portions having a contact surface (141) inclined so as to have different heights along a circumferential surface thereof.

Also, in the sealing apparatus according to the present invention, the second sealing unit (200) may include a second stopper portion (240) in tight contact with a contact surface (141) of the pair of first stopper portions (140), and the contact surface (141) of the first stopper portion (140) and the second stopper portion (240) may be in line-contact or point contact with each other.

Also, in the sealing apparatus according to the present invention, the second sealing unit (200) may include a second heating block (210) configured to be heated to a predetermined temperature, a second support block (220) in tight contact with the second heating block (210), a second sealing tool (230) located in tight contact with one surface of the second support block (220), the second sealing tool being configured to press the other surface of the sealed portion, and a pair of second stopper portions (240) located on both sides of the second support block (220).

Also, in the sealing apparatus according to the present invention, one end of the second stopper portion (240) may have a blade-like shape with an inclined surface configured to be in line contact with the contact surface (141) of the first stopper portion (140).

Also, in the sealing apparatus according to the present invention, one end of the second stopper portion (240) may have a hemispherical shape configured to be in point contact with the contact surface (141) of the first stopper portion (140).

Also, in the sealing apparatus according to the present invention, an insertion hole (142) may be provided in the center of the contact surface (141) of the first stopper portion (140), and a fastening member (143) configured to connect the first support block (120) and the first stopper portion (140) together may be received in the insertion hole (142).

Also, in the sealing apparatus according to the present invention, the fastening member (143) may be a bolt.

Also, in the sealing apparatus according to the present invention, a packing member (144) may be received in the insertion hole (142), and the fastening member (143) may be fastened to the first support block (120) after passing through the packing member (144).

Also, in the sealing apparatus according to the present invention, the packing member (144) may include an elastic material.

Also, in the sealing apparatus according to the present invention, the packing member (144) may include rubber or silicone.

Also, in the sealing apparatus according to the present invention, a radial-shaped marking portion (145) may be provided on the contact surface (141).

In addition, a sealing method according to the present invention includes (S1) adjusting a contact position of the first stopper portion and the second stopper portion so as to correspond to a thickness of a sealed portion, (S2) locating the sealed portion between the first sealing tool and the second sealing tool, and (S3) pressing and heating the sealed portion through the first sealing tool and the second sealing tool to seal the sealed portion.

### [Advantageous Effects]

As is apparent from the above description, in a pouch-shaped battery case sealing apparatus according to the present invention and a sealing method using the same, one of a pair of sealing units is provided with a stopper portion having a function to adjust the distance between a pair of sealing tools, whereby the pouch-shaped battery case sealing apparatus may be used even if the thickness of a sealed portion of a battery case changes.

Also, in the pouch-shaped battery case sealing apparatus according to the present invention and the sealing method using the same, it is possible to adjust the distance between the pair of sealing tools simply by rotating the stopper portion clockwise or counterclockwise, whereby manipulation of the apparatus is easy, which may contribute to improvement of product productivity.

### [Description of Drawings]

FIG. 1 is a view showing that a conventional pouch-shaped battery case sealing apparatus seals a secondary battery.
FIG. 2 is a perspective view of a pouch-shaped battery case sealing apparatus according to the present invention.
FIG. 3 is a front view of the pouch-shaped battery case sealing apparatus according to the present invention.
FIG. 4 is a view showing the state in which a pouch-shaped battery case is seated in the pouch-shaped battery case sealing apparatus according to the present invention.
FIG. 5 is a view showing that the pouch-shaped battery case sealing apparatus according to the present invention presses the pouch-shaped battery case.
FIG. 6 is an enlarged perspective view of a first stopper portion constituting the pouch-shaped battery case sealing apparatus according to the present invention.
FIG. 7 is an enlarged perspective view of a second stopper portion constituting the pouch-shaped battery case sealing apparatus according to the present invention.
FIG. 8 is an exploded perspective view illustrating a coupling structure of the first stopper portion constituting the pouch-shaped battery case sealing apparatus according to the present invention.
FIG. 9 is a sectional view illustrating the coupling structure of the first stopper portion constituting the pouch-shaped battery case sealing apparatus according to the present invention.
FIG. 10 is a view illustrating the adjustment of the height of each of the first stopper portion and the second stopper portion constituting the pouch-shaped battery case sealing apparatus according to the present invention.

### [Best Mode]

Now, preferred embodiments of the present invention will be described in detail with reference to the accompanying drawings such that the preferred embodiments of the present invention may be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a predetermined element is included does not mean that other elements are excluded, but means that such elements may be further included unless mentioned otherwise.

Hereinafter, a pouch-shaped battery case sealing apparatus according to the present invention and a sealing method using the same will be described.

First, referring to FIG. 1, a pouch-shaped secondary battery 10 includes an electrode assembly 11, which is configured such that a pair of electrode leads (not shown) is located opposite each other or is located side by side in the same direction, and a battery case 12 configured to receive the electrode assembly 11.

Here, the electrode assembly 11 may be a jelly-roll type electrode assembly, which is configured to have a structure in which a long sheet type negative electrode and a long sheet type positive electrode are wound in the state in which a separator is interposed therebetween, a stacked type electrode assembly including unit cells, each of which is configured to have a structure in which a rectangular positive electrode and a rectangular negative electrode are stacked in the state in which a separator is interposed therebetween, a stacked and folded type electrode assembly, which is configured to have a structure in which unit cells are wound using a long separation film, or a laminated and stacked type electrode assembly, which is configured to have a structure in which unit cells are stacked in the state in which a separator is interposed therebetween and are then attached to each other; however, the present invention is not limited thereto.

The battery case 12 may be made of laminate sheet including an outer cover layer, a metal layer, and an inner cover layer to receive the electrode assembly 11.

The inner covering layer is in direct contact with the electrode assembly 11, and therefore the inner covering layer must exhibit high insulation properties and high electrolytic resistance. In addition, the inner covering layer must exhibit high sealability in order to hermetically isolate the battery case from the outside, i.e., a thermallybonded sealed portion between inner layers must exhibit excellent thermal bonding strength.

The metal layer, which abuts the inner covering layer, corresponds to a barrier layer configured to prevent moisture or various gases from permeating into the battery from the outside. An aluminum thin film, which is lightweight and easily shapeable, may be used as a preferred material for the metal layer.

The outer covering layer is provided at the other surface of the metal layer, and the outer covering layer may be made of a heat-resistant polymer that exhibits excellent tensile strength, resistance to moisture permeation, and resistance to air transmission such that the outer covering layer exhibits high heat resistance and chemical resistance while protecting the electrode assembly. As an example, the outer covering layer may be made of nylon or polyethylene terephthalate; however, the present invention is not limited thereto.

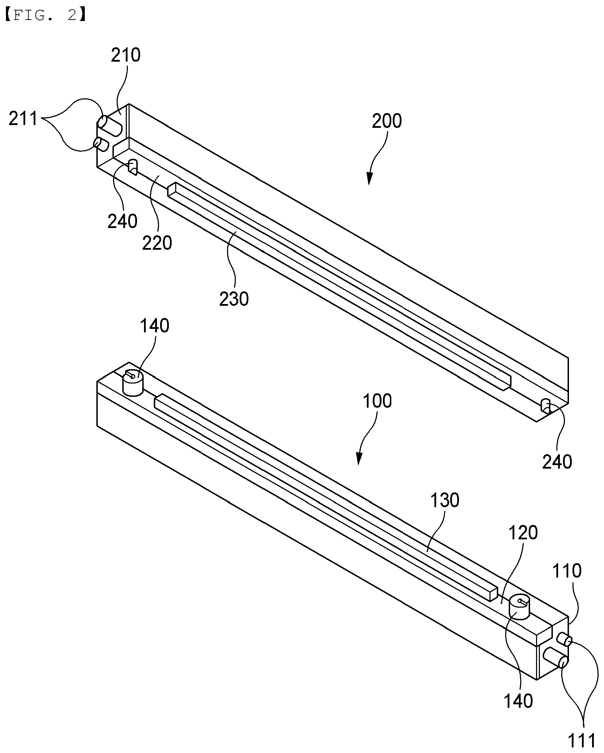

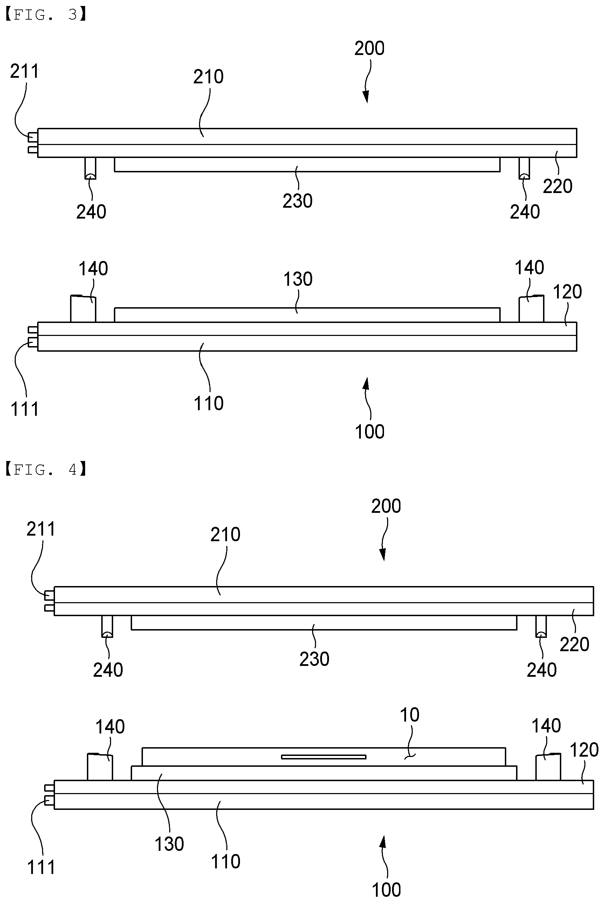

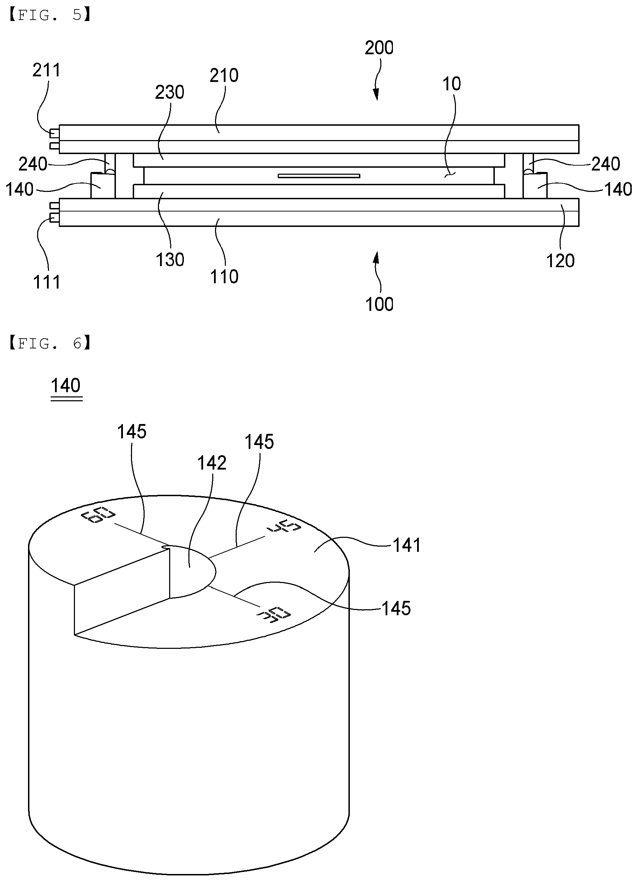

FIG. 2 is a perspective view of a pouch-shaped battery case sealing apparatus according to the present invention, and FIG. 3 is a front view of the pouch-shaped battery case sealing apparatus according to the present invention. In addition, FIG. 4 is a view showing the state in which a pouch-shaped battery case is seated in the pouch-shaped battery case sealing apparatus according to the present invention, and FIG. 5 is a view showing that the pouch-shaped battery case sealing apparatus according to the present invention presses the pouch-shaped battery case.

Referring to FIGs. 2 to 5, an apparatus for sealing a sealed portion S of the battery case 12 having the aforementioned configuration includes a first sealing unit 100 and a second sealing unit 200.

First, the first sealing unit 100 may include a first heating block 110, a first support block 120, a first sealing tool 130, and a first stopper portion 140.

The first heating block 110 may be heated to a certain temperature, and may be configured to transfer heat to the first sealing tool 130 via the first support block 120. The first heating block 110 may be made of a conductor (e.g., a metal) having high thermal conductivity.

In addition, a first heater 111 may be provided in the first heating block 110. For example, the first heater 111 may be provided in the first heating block 110 at a central part thereof so as to have a rod shape.

The first heater 111 may be configured to have a temperature considering the temperature at which the sealed portion S of the battery case 12 is sealed, and the first heater 111 may have a heating wire configured to be heated by electricity supplied from an external power source (not shown).

The first support block 120 may be in tight contact with the first heating block 110. The first support block 120 may be interposed between the first heating block 110 and the first sealing tool 130 to support the first sealing tool 130.

The first sealing tool 130 may be located in tight contact with the first support block 120 so as to press a lower surface (6 o'clock direction in FIGs. 4 and 5) of the sealed portion S. The first sealing tool 130 may receive heat from the first heating block 110 to heat and press the lower surface of the sealed portion S.

Here, it is preferable for the first sealing tool 130 to have a length equal to or slightly greater than the length of the sealed portion S so as to be in tight contact with the entirety of the sealed portion S.

The first stopper portion 140 is located on both sides of the first support block 120 to adjust the distance between the first sealing unit 100 and the second sealing unit 200 when sealing the sealed portion S of the battery case 12, and a detailed description thereof will be given below.

The second sealing unit 200 may include a second heating block 210, a second support block 220, a second sealing tool 230, and a second stopper portion 240.

The second heating block 210 may be heated to a certain temperature, and may be configured to transfer heat to the second sealing tool 230 via the second support block 220. The second heating block 210 may be made of a conductor (e.g., a metal) having high thermal conductivity.

In addition, a second heater 211 may be provided in the second heating block 210. For example, the second heater 211 may be provided in the second heating block 210 at a central part thereof so as to have a rod shape.

The second heater 211 may be configured to have a temperature considering the temperature at which the sealed portion S of the battery case 12 is sealed, and the second heater 211 may have a heating wire configured to be heated by electricity supplied from an external power source (not shown).

The second support block 220 may be in tight contact with the second heating block 210. The second support block 220 may be interposed between the second heating block 210 and the second sealing tool 230 to support the second sealing tool 230.

The second sealing tool 230 may be located in tight contact with the second support block 220 so as to press an upper surface (12 o'clock direction in FIGs. 4 and 5) of the sealed portion S. The second sealing tool 230 may receive heat from the second heating block 210 to heat and press the upper surface of the sealed portion S.

Here, it is preferable for the second sealing tool 230 to have a length equal to or slightly greater than the length of the sealed portion S so as to be in tight contact with the entirety of the sealed portion S.

The second stopper portion 240 is located on both sides of the second support block 220 to adjust the distance between the first sealing unit 100 and the second sealing unit 200 when sealing the sealed portion S of the battery case 12, and a detailed description thereof will be given below.

Meanwhile, in the sealing apparatus according to the present invention, the first heating block 110, the first support block 120, the first sealing tool 130, the second heating block 210, the second support block 220, and the second sealing tool 230 are obvious to those skilled in the art, and therefore a more detailed description thereof will be omitted.

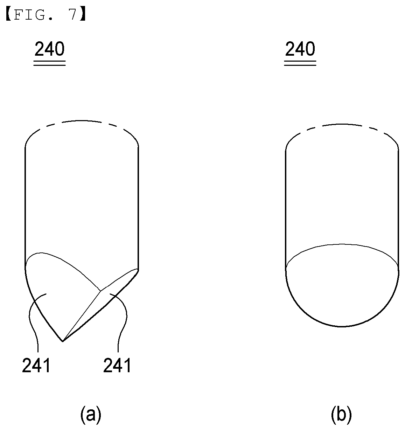

FIG. 6 is an enlarged perspective view of the first stopper portion constituting the pouch-shaped battery case sealing apparatus according to the present invention, and FIG. 7 is an enlarged perspective view of the second stopper portion constituting the pouch-shaped battery case sealing apparatus according to the present invention.

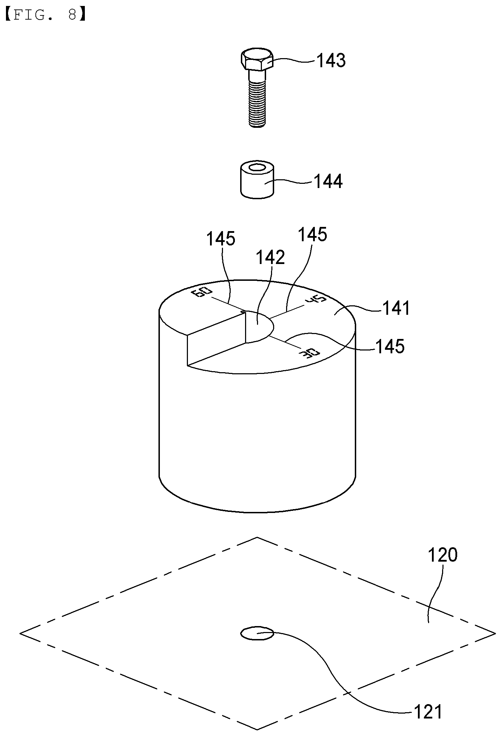

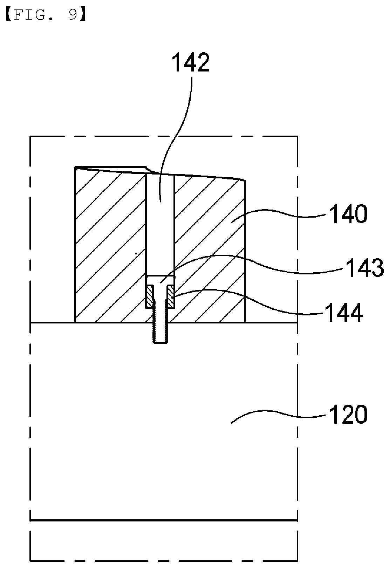

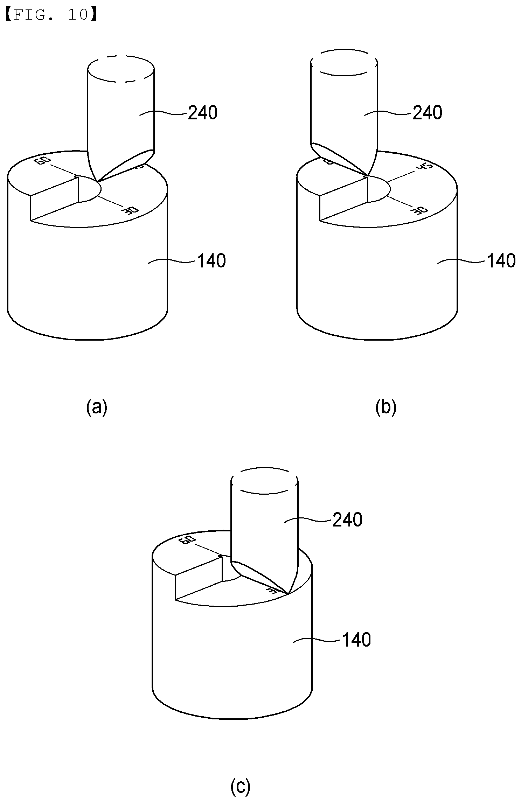

In addition, FIG. 8 is an exploded perspective view illustrating a coupling structure of the first stopper portion constituting the pouch-shaped battery case sealing apparatus according to the present invention, FIG. 9 is a sectional view illustrating the coupling structure of the first stopper portion constituting the pouch-shaped battery case sealing apparatus according to the present invention, and FIG. 10 is a view illustrating the adjustment of the height of each of the first stopper portion and the second stopper portion constituting the pouch-shaped battery case sealing apparatus according to the present invention.

The first stopper portion and the second stopper portion will be described with reference to FIGs. 2 to 10.

First, the first stopper portion 140, located on both sides of the first support block 120, is rotatably coupled thereto. In other words, the first stopper portion 140 may be rotated clockwise or counterclockwise relative to one surface of the first support block 120.

The first stopper portion 140 may have an external shape that is roughly cylindrical, and one end of the first stopper portion may include a contact surface 141 in tight contact with the second stopper portion 240, an insertion hole 142 formed in the center of the contact surface 141, a fastening member 143, and a packing member 144.

Specifically, when sealing the sealed portion S of the battery case 12, the contact surface 141 outside the insertion hole 142 is continuously inclined at different heights along a circumferential surface of the first stopper portion 140 so as to adjust the distance between the first sealing tool 130 and the second sealing tool 230.

When fastening the first stopper portion 140 to the first support block 120, the fastening member 143 inserted into the insertion hole 142 of the first stopper portion 140 is fixed to the first sealing tool 130 through the first stopper portion 140.

At this time, it is preferable for the fastening member 143 to pass through the packing member 144 received in the insertion hole 142, the first stopper portion 140, and the first sealing tool 130 in order.

In addition, it is further preferable for the packing member 144 to be made of an elastic material, such as rubber or silicone, and the fastening member 143 may be a bolt having a head and a body.

The first stopper portion 140, which is in tight contact with the second stopper portion 240, is rotatable relative to the first support block 120, but must not be easily rotated at the rotated position.

To this end, in the present invention, the fastening member 143 passes through the packing member 144, the first stopper portion 140, and the first sealing tool 130 in order. Therefore, when rotating the first stopper portion 140, it is not necessary to separately manipulate the fastening member 143.

In other words, even if the fastening member 143 is fixed to the first sealing tool 130 through the packing member 144 and the first stopper portion 140, the first stopper portion 140 may be rotated when slightly pulled upward (12 o'clock direction in FIG. 10), since the packing member 144 is made of an elastic material. Of course, when the pulling force is released, the volume of the packing member 144 returns to the original volume thereof, causing the first stopper portion 140 to remain fixed at the rotated position.

The second stopper portion 240, located on both sides of the second support block 220, may have a blade-like shape with an inclined surface 241 formed at one end thereof so as to be in line contact with the contact surface 141 of the first stopper portion 140 (see (a) of FIG. 7).

As another example, one end of the second stopper portion 240, located on both sides of the second support block 220, may have a hemispherical shape so as to be in point contact with the contact surface 141 of the first stopper portion 140 (see (b) of FIG. 7).

Particularly, as shown in (a) of FIG. 7, when the contact surface 141 of the first stopper portion 140 is continuously inclined and one end of the second stopper portion 240 is blade-shaped, it is possible to more precisely adjust the distance between the first sealing tool 130 and the second sealing tool 230.

Meanwhile, a marking portion 145 provided radially on the contact surface 141 may function to indicate the distance between the first sealing tool 130 and the second sealing tool 230 when the blade-shaped second stopper portion 240 is located.

For example, if the number 30 is marked at a specific position on the marking portion 145, which may be a dotted or solid line, the marking portion 145 indicates that the distance between the first sealing tool 130 and the second sealing tool 230 is 30 mm when the blade of the second stopper portion 240 is located on the marking portion.

Of course, this is merely one example, and the interval, number, and numerical values of the marking portions 145 may be easily changed.

Next, a pouch-shaped battery case sealing method using the above-described pouch-shaped battery case sealing apparatus will be described with reference to FIGs. 2 to 10.

The sealing method according to the present invention includes (S1) adjusting the contact position of the first stopper portion 140 and the second stopper portion 240 so as to correspond to the thickness of a sealed portion S, (S2) locating the sealed portion S between the first sealing tool 130 and the second sealing tool 230, and (S3) pressing and heating the sealed portion S through the first sealing tool 130 and the second sealing tool 230 to seal the sealed portion.

In step (S1), the protrusion heights of the first stopper portion 140 and the second stopper portion 240 may be adjusted by rotating the first stopper portion 140 clockwise or counterclockwise so as to correspond to the thickness of the sealed portion S.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

| | | | |
|---|---|---|---|
| 10: | Pouch-shaped secondary battery | 12: | Battery case |
| 11: | Electrode assembly | | |
| 100: | First sealing unit | | |
| 110: | First heating block | 111: | First heater |
| 120: | First support block | | |
| 130: | First sealing tool | | |
| 140: | First stopper portion | | |
| 141: | Contact surface | 142: | Insertion hole |
| 143: | Fastening member | 144: | Packing member |
| 145: | Marking portion | | |
| 200: | Second sealing unit | | |
| 210: | Second heating block | 211: | Second heater |
| 220: | Second support block | | |
| 230: | Second sealing tool | | |
| 240: | Second stopper portion | 241: | Inclined surface |
| S: | Sealed portion | | |

## Claims

1. A sealing apparatus for sealing a sealed portion of a battery case having an electrode assembly received therein, the sealing apparatus comprising:
a first sealing unit configured to be located on one side of the sealed portion of the battery case; and
a second sealing unit configured to be located on the other side of the sealed portion of the battery case, wherein
the first sealing unit comprises:
a first heating block configured to be heated to a predetermined temperature;
a first support block in tight contact with the first heating block;
a first sealing tool located in tight contact with one surface of the first support block, the first sealing tool being configured to press one surface of the sealed portion; and
a pair of first stopper portions located on both sides of the first support block and rotatably coupled thereto, each of the pair of first stopper portions having a contact surface inclined so as to have different heights along a circumferential surface thereof.

2. The sealing apparatus according to claim 1, wherein
the second sealing unit comprises a second stopper portion in tight contact with a contact surface of the pair of first stopper portions, and
the contact surface of the first stopper portion and the second stopper portion are in line-contact or point contact with each other.

3. The sealing apparatus according to claim 2, wherein the second sealing unit comprises:
a second heating block configured to be heated to a predetermined temperature;
a second support block in tight contact with the second heating block;
a second sealing tool located in tight contact with one surface of the second support block, the second sealing tool being configured to press the other surface of the sealed portion; and
a pair of second stopper portions located on both sides of the second support block.

4. The sealing apparatus according to claim 3, wherein one end of the second stopper portion has a blade-like shape with an inclined surface configured to be in line contact with the contact surface of the first stopper portion.

5. The sealing apparatus according to claim 3, wherein one end of the second stopper portion has a hemispherical shape configured to be in point contact with the contact surface of the first stopper portion.

6. The sealing apparatus according to claim 2, wherein
an insertion hole is provided in a center of the contact surface of the first stopper portion, and
a fastening member configured to connect the first support block and the first stopper portion together is received in the insertion hole.

7. The sealing apparatus according to claim 6, wherein the fastening member is a bolt.

8. The sealing apparatus according to claim 7, wherein
a packing member is received in the insertion hole, and
the fastening member is fastened to the first support block after passing through the packing member.

9. The sealing apparatus according to claim 8, wherein the packing member includes an elastic material.

10. The sealing apparatus according to claim 9, wherein the packing member comprises rubber or silicone.

11. The sealing apparatus according to claim 4, wherein a radial-shaped marking portion is provided on the contact surface.

12. A sealing method using the sealing apparatus according to any one of claims 1 to 11, the sealing method comprising:
(S1) adjusting a contact position of the first stopper portion and the second stopper portion so as to correspond to a thickness of a sealed portion;
(S2) locating the sealed portion between the first sealing tool and the second sealing tool; and
(S3) pressing and heating the sealed portion through the first sealing tool and the second sealing tool to seal the sealed portion.
